# EUROPÄISCHE PATENTSCHRIFT

(11) **EP 1 737 113 B1**
(45) Veröffentlichungstag und Bekanntmachung des Hinweises auf die Patenterteilung: **05.04.2017**
(21) Anmeldenummer: 06011386.7
(22) Anmeldetag: 01.06.2006
(51) Int. Cl.: H02M 3/335, H02M 3/338

(54) **Regelschaltung zur Strom- und Spannunsregelung für ein Schaltnetzteil**
Control circuit for regulating current and voltage of a switch mode power supply
Circuit de commande pour la régulation de courant et de tension d'un circuit d'alimentation à découpage

(30) Priorität: 24.06.2005 DE 102005029455
(43) Veröffentlichungstag der Anmeldung: 27.12.2006
(73) Patentinhaber: Power Systems Technologies GmbH, 48346 Ostbevern (DE)
(72) Erfinder: Schröder, Ralf (genannt Berghegger), 49219 Glandorf (DE)
(74) Vertreter: Grünecker Patent- und Rechtsanwälte PartG mbB

(56) Entgegenhaltungen:
- DE-A1- 10 310 361
- DE-A1- 19 711 771
- DE-A1-102004 016 927

## Beschreibung

Die vorliegende Erfindung bezieht sich auf eine Regelschaltung zum Regeln einer Ausgangsspannung eines primärgesteuerten Schaltnetzteils sowie auf ein zugehöriges Verfahren. Das Schaltnetzteil weist einen primärseitigen Schalter und einen Transformator mit mindestens einer Hilfswicklung, in der nach dem Öffnen des primärseitigen Schalters eine Hilfsspannung induziert wird, auf. Die in der mindestens einen Hilfswicklung induzierte Spannung dient als Grundlage für die dem Regelschaltkreis zugeführte Messspannung und für die Versorgungsspannung der Regelschaltung. Die vorliegende Erfindung bezieht sich außerdem auf ein zugehöriges Schaltnetzteil.

Üblicherweise verwenden bekannte Schaltnetzteile einen Leistungstransistor, beispielsweise einen Insulated-Gate-Bipolartransistor (IGBT), als primärseitigen Schalter, um einen gepulsten Stromfluss an ein Netzwerk von induktiven und kapazitiven Energiespeicherelementen zu speisen, welche die geschalteten Strompulse in eine geregelte Gleichspannung umwandeln. Schaltnetzteile können Ausgangsspannungen liefern, die größer, gleich oder von entgegengesetzter Polarität wie die ungeregelte Eingangsspannung sind, je nach dem Betriebsmodus des Schaltnetzteils. Häufig werden Schaltnetzteile in Leistungsversorgungsschaltungen, wie sie beispielsweise für eine Vielzahl elektronischer Geräte erforderlich sind, eingesetzt. Dabei ist insbesondere im Falle mobiler elektronischer Geräte wünschenswert, dass ein derartiges Schaltnetzteil Eingangsspannungen im Bereich von 85 V Wechselspannung bis 270 V Wechselspannung akzeptiert und daher bei unterschiedlichen Netzversorgungen überall auf der Welt ohne Modifikationen oder Schalter arbeiten kann.

Die Ausgangsspannung eines Schaltnetzteils wird mittels eines Rückkopplungssignals geregelt, das die Ausgangsspannung abbildet. Dieses Rückkopplungssignal wird verwendet, um den Arbeitszyklus des schaltenden Leistungstransistors zu steuern. Um ein geeignetes Rückkopplungssignal bereitzustellen, existieren verschiedene Ansätze, beispielsweise kann eine primärseitige Hilfswicklung vorgesehen sein, die während der Ausschaltzeit des primärseitigen Transistors ein Rückkopplungssignal erzeugt, das ein Abbild der Ausgangsspannung liefert.

Derartige Schaltnetzteile mit Hilfswicklungen sind beispielsweise in der deutschen Patentanmeldung DE 103 10 361, der europäischen Patentanmeldung EP 03 016 065.9, der US-Patentschrift 5,438,499 oder der deutschen Offenlegungsschrift DE 197 11 771 A1 gezeigt. Dabei wird das in der Hilfswicklung erzeugte Signal einem Rückkopplungsschaltkreis zugeführt, der das Regelsignal an die Regelschaltung liefert. Bei einem Schaltnetzteil nach dem Sperrwandlerprinzip, bei dem die übertragene Energie pro Puls gleich bleibt und die Dauer der Pausen zwischen den Pulsen einstellbar ist, wie dies in der EP 03 016 065.9 gezeigt ist, kann die Ausgangsspannung mit der primären Hilfsspannung sehr gut abgebildet und geregelt werden.

Es besteht jedoch das Problem, dass sich der Ausgangsstrom nur in sehr aufwendiger Weise erfassen lässt. Beispielsweise kann, wie in der DE 103 10 361 gezeigt, die Stromflusszeit der Sekundärwicklung des Wandlers bestimmt werden. Alternativ kann auch ein Optokoppler eingesetzt werden, wie dies beispielsweise in der europäischen Patentanmeldung EP 1 146 630 A2 gezeigt ist.

Um auf eine vereinfachte Art und Weise die Ausgangsspannung und den Ausgangsstrom einstellen zu können und die dazu notwendigen Bauteilekosten zu minimieren, wurde ein Verfahren zum Regeln der Ausgangsspannung eines primärgesteuerten Schaltnetzteils vorgeschlagen, bei dem die Schaltfrequenz in linearer Abhängigkeit von der Hilfsspannung eingestellt wird, indem durch die Ladezeit eines Ladekondensators die Schaltfrequenz des primärseitigen Schalters festgelegt wird. Dieses Verfahren ist im Detail in der deutschen Patentanmeldung DE 10 2004 016927.6 beschrieben.

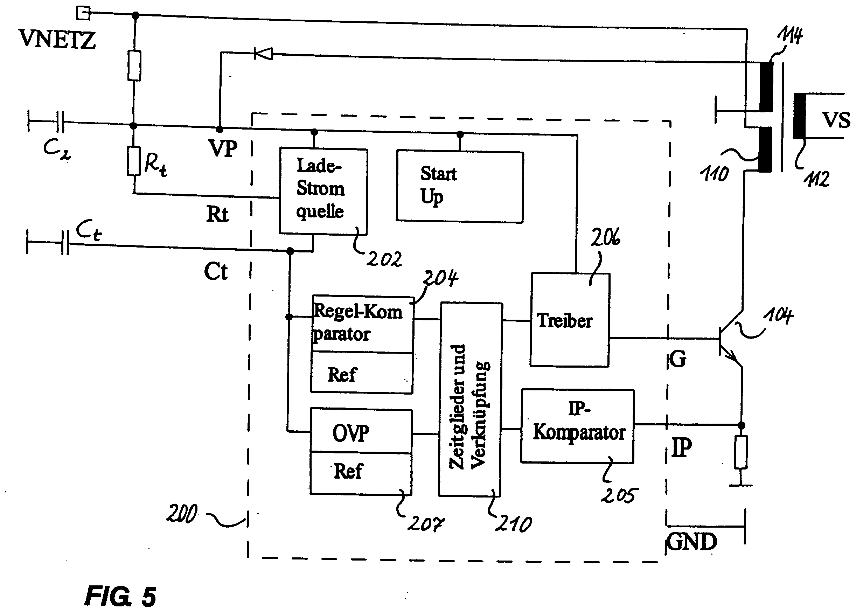

Die Schaltungsanordnung der Regelschaltung aus der DE 10 2004 016927.6 ist in Figur 5 gezeigt. Bei der Regelschaltung gemäß Figur 5 wird die Hilfsspannung am Versorgungsspannungspin V_{P} einer anwenderspezifischen integrierten Schaltung (ASIC) 200 gemessen. Daher kann in nachteiliger Weise der Spannungspegel nur durch Ändern eines Längswiderstands in der Erzeugung der Betriebsspannung des ASIC eingestellt werden. Da dieser aber einen großen Einfluss auf den Verlauf der Ausgangskennlinie hat, ist ein Trimmen der Ausgangsspannung nur eingeschränkt möglich. Weiterhin hat die Schaltung nach Figur 5 den Nachteil, dass der Versorgungsstrom des ASIC 200 und der Basisstrom des Schalttransistors 104 die Spannungsregelung beeinflussen, da sie die Betriebsspannung des ASIC 200, welche gleichzeitig die Messspannung ist, belasten.

Darüber hinaus wird, wie in der DE 10 2004 016927.6 im Detail ausgeführt, der Ladestrom des zeitbestimmenden Kondensators Cₜ solange ausgeschaltet, wie die Messspannung über dem Referenzwert V Cₜ₁ liegt. Deshalb muss bei geringer Last eine lange Ausschaltzeit entstehen. Da aber der Entladestrom des Betriebsspannungskondensators C2 etwa konstant ist, muss anfänglich die Referenzspannung deutlich überschritten werden, um eine ausreichend lange Entladezeit zu erzeugen. Bei großer Last dagegen ist die Ausschaltzeit kurz und die Überschreitung der Referenzspannung somit nur gering. Da die anfängliche Messspannung der Ausgangsspannung entspricht, weicht die Ausgangsspannung entsprechend der Überschreitung von dem Sollwert ab und ist demzufolge im Leerlauf höher als unter Last.

Weiterhin hat die hier vorgeschlagene Lösung den Nachteil, dass die Betriebsspannung nicht so ausgelegt werden kann, dass auch im Kurzschlussfall der eingestellte Ausgangsstrom fließt, denn im Kurzschluss spiegelt die Messspannung nur noch die Spannung an der Sekundärdiode wider und es ist somit nicht mehr ausreichend Spannung für ein korrektes Arbeiten des ASIC vorhanden.

Schließlich treten bei der in Figur 5 gezeigten Anordnung in der Stromregelung nachteilige Einflüsse der Gleichrichterdiode auf die Genauigkeit der Regelung auf.

Zusammenfassend ergeben sich also bei einem Schaltnetzteil gemäß der Anordnung der Figur 5 drei wesentliche Probleme: Im Leerlauf ist die Ausgangsspannung höher als unter Last; bei geringer Eingangsspannung ist der Ausgangsstrom kleiner als bei Nominalspannung; die Ausgangsspannung kann nicht getrimmt werden, ohne dass sich der Kennlinienverlauf ändert.

Aus der Druckschrift DE 197 11 771 A1 ist ein geregeltes Schaltnetzteil bekannt. Dieses Schaltnetzteil weist auf: einen Hochfrequenztransformator, dessen Primärwicklung mit einem Schalter in Reihe liegt, der von einem Treiber-IC schaltbar ist; eine Rückkopplung von der Sekundärseite des Netzteils oder einer Hilfswicklung des Transformators zu dem Treiber-IC zur lastabhängigen Einstellung der Schaltfrequenz; sowie einer Überlast-Sicherungseinrichtung, die das Netzteil bei Anliegen eines über einem Grenzwert liegenden sekundärseitigen Laststromes abschaltet oder herunterregelt.

Eine gegenüber der DE 10 2004 016927.6 verbesserte Regelgenauigkeit bietet die in der DE 103 10 361 B4 dargestellte Regelschaltung. Diese Schaltung ist jedoch vergleichsweise aufwendig und benötigt ein 8-Pin-Gehäuse, was die Kosten erheblich erhöht.

Daher liegt der vorliegenden Erfindung die Aufgabe zugrunde, die Probleme der bekannten Ansteuerschaltungen zu überkommen und eine verbesserte Regelschaltung für ein primärgesteuertes Schaltnetzteil anzugeben, die bei erhöhter Regelgenauigkeit dennoch mit geringen Abmessungen und Bauteilekosten aufgebaut werden kann.

Diese Aufgabe wird gemäß den Merkmalen der unabhängigen Ansprüche gelöst. Die abhängigen Ansprüche zeigen weitere vorteilhafte Weiterentwicklungen der vorliegenden Erfindung auf.

Dabei wird zum einen das in der DE 10 2004 016927.6 vorgeschlagene Prinzip verwendet, die Schaltfrequenz des primärseitigen Schalters in Abhängigkeit von der an der Hilfswicklung induzierten Hilfsspannung so einzustellen, dass die Ausgangsspannung und der Ausgangsstrom des Schaltnetzteils Werte gemäß einer vorbestimmten Ausgangskennlinie annehmen. Dabei ist unter dem Begriff "Ausgangskennlinie" die Abhängigkeit zwischen der Ausgangsspannung und dem Ausgangsstrom in Form einer Kurve U_{AUS} (I_{AUS}) zu verstehen.

Dadurch kann vermieden werden, dass aufwendige bauteileintensive Messverfahren zur Bestimmung des Ausgangsstroms vorgesehen werden müssen. Dabei wird beispielsweise die Schaltfrequenz in linearer Abhängigkeit von der Hilfsspannung eingestellt, indem durch die Ladezeit eines Ladekondensators die Schaltfrequenz des primärseitigen Schalters bestimmt wird. Der Ladekondensator wird mit einem zu der Hilfsspannung proportionalen Strom bis zu einer vorbestimmten Spannungsschwelle aufgeladen und bestimmt den Zeitpunkt, zu dem der Schalter eingeschaltet wird.

Zum anderen gilt es, die Ladedauer des zeitbestimmenden Kondensators in der Spannungsregelung nicht mehr durch Abschalten des Ladestroms zu verlängern, sondern den Ladestrom kontinuierlich fließen zu lassen und den Kondensator zum Verlängern der Ladezeit kurzzuschließen. Dies ermöglicht es, dass der Ladewiderstand direkt an die Versorgungsspannung angeschlossen werden kann und der Pin Rₜ, an den der Ladewiderstand R_{T} bei der in der Fig. 5 gezeigten Regelschaltung angeschlossen ist, ist nunmehr frei und kann dazu verwendet werden, um die Spannungserfassung durchzuführen.

Ein wesentlicher Vorteil ist, dass als Messspannung eine von der Betriebs- oder Versorgungsspannung der Regelschaltung unabhängige Spannung verwendet werden kann und dass deshalb der Einfluss der Belastung der Betriebsspannung auf die Ausgangskennlinie minimiert wird. Die Spannungsregelung wird dadurch wesentlich genauer.

Gemäß einer vorteilhaften Ausführungsform wird die Schaltfrequenz in linearer Abhängigkeit von der Messspannung eingestellt, indem die Ladezeit eines Ladekondensators die Schaltfrequenz des primärseitigen Schalters bestimmt und in Abhängigkeit von der Messspannung aufladbar ist. Diese Lösung bietet den Vorteil einer besonders einfachen schaltungstechnischen Realisierbarkeit mit sehr geringem Bauteilebedarf.

Um den Zeitpunkt festzulegen, zu dem der primärseitige Schalter eingeschaltet wird, kann in vorteilhafter Weise die Regelschaltung so ausgebildet sein, dass sie den Ladekondensator kurzschließt, wenn die Messspannung einen vorbestimmten Schwellenwert erreicht. Auf diese Weise lässt sich der Schaltungsaufwand wesentliche reduzieren.

Bildet man die Regelschaltung so aus, dass sie die an dem Ladekondensator abfallende Spannung mit einem Referenzwert vergleicht und ein Einschaltsignal zum Einschalten des primärseitigen Schalters erzeugt, wenn die an dem Ladekondensator abfallende Spannung den Referenzwert erreicht, lässt sich in besonders einfacher Weise eine vorbestimmte Ausgangskennlinie des Schaltnetzteils erreichen.

In diesem Fall müsste die Schaltfrequenz in der Stromregelung idealerweise direkt proportional zu der Summe aus der Ausgangsspannung U_{AUS} und dem Spannungsabfall an einer Sekundärdiode sein. Da aber die Ausgangsspannung indirekt über die Hilfswicklung des Transformators erfasst werden soll, führt diese Gleichrichterdiode zu einer Abweichung vom Idealwert, da sie einen Offset von der auszuwertenden Messspannung abzieht. Weiterhin ist der Ladestrom des zeitbestimmenden Kondensators nicht proportional zur Messspannung, da die Spannung an dem Kondensator in Reihe zu dem Ladewiderstand liegt. Man könnte diese Abweichung dadurch reduzieren, indem man den Referenzwert zum Einschalten des Schalttransistors verringert. Dies hätte aber den Nachtteil, dass die Erkennung weniger genau wird, da der Offset an einem Eingangskomparator stärker wirksam wäre. Darüber hinaus würde ein größerer Kondensator für die gleiche Zeit benötigt. Schließlich entsteht durch eine Entladedauer des zeitbestimmenden Kondensators ebenfalls eine Abweichung.

Daher kann der Referenzwert in Abhängigkeit von der Messspannung einstellbar sein. Es kann also der Referenzspannung, welche die Schwellenspannung zum Einschalten des Schalttransistors darstellt, eine Spannung überlagert werden, die von der Messspannung abhängig ist. Durch eine derartige einstellbare Referenzspannung können die oben beschriebenen Abweichungen kompensiert werden, sodass sich ein nahezu ausgangsspannungsunabhängiger Ausgangstrom ergibt. Idealerweise sollte die so entstehende neue Referenzspannung für das Einschalten des Schalttransistors einen Verlauf haben, dass der Einfluss der sekundärseitigen Gleichrichterdiode auf die Messspannung kompensiert ist. Näherungsweise kann ein solcher Spannungsverlauf mit Hilfe einiger Z-Dioden und Widerstände erzeugt werden, sodass die entsprechende Schaltung vollständig in einem ASIC integrierbar ist.

Gemäß einer vorteilhaften Weiterbildung der vorliegenden Regelschaltung ist ein Abtasthalteglied (sample and hold, S&H) zum Erfassen einer Abweichung der Messspannung von dem Referenzwert unmittelbar nach dem Abschalten des primärseitigen Schalters vorgesehen. Auf diese Weise kann verhindert werden, dass die Ausgangspannung des Schaltnetzteils im Leerlauf höher ist als unter Last. Die Höhe der Abweichung der Messspannung von dem Referenzwert kurz nach dem Abschalten des Schalttransistors gespeichert. Der gespeicherte Wert wird zu der Messspannung hinzu addiert und erst, wenn die Summe aus dem gespeicherten Wert und der Messspannung die Referenzspannung unterschreitet, wird der Schalttransistor wieder eingeschaltet. Alternativ ist es auch möglich, den gespeicherten Wert von der Referenzspannung abzuziehen. Auf diese Weise wird die Überschreitung der Referenzspannung ausgeglichen und die Ausgangsspannung wird lastunabhängig.

Die vorteilhaften Eigenschaften der erfindungsgemäßen Regelschaltung kommen vor allem in einem primärgesteuerten Schaltnetzteil zum Tragen.

Gemäß einer vorteilhaften Ausführungsform weist der Transformator des Schaltnetzteils eine erste Hilfswicklung zum Erzeugen der Messspannung und eine zweite Hilfswicklung zum Erzeugen der Versorgungsspannung auf. Dadurch kann eine vollständige Trennung der Messspannung von der Betriebsspannung realisiert werden und die Regelgenauigkeit wird signifikant verbessert.

Um die Ausgangsspannung zu trimmen, kann der Messspannungsanschluss mit einem Spannungsteiler verbunden sein, der die Messspannung und dadurch die Ausgangsspannung auf besonders einfache Weise trimmt.

Da die Spannungserfassung unabhängig von der Betriebsspannung der Regelschaltung erfolgt, kann die Betriebsspannung so ausgelegt werden, dass auch im Kurzschluss der eingestellte Ausgangsstrom fließt.

Anhand der in den beiliegenden Zeichnungen dargestellten Ausgestaltungen wird die Erfindung im Folgenden näher erläutert. Ähnliche oder korrespondierende Einzelheiten sind in den Figuren mit denselben Bezugszeichen versehen. Es zeigen:
- **Figur 1**: ein Blockschaltbild einer Regelschaltung gemäß der vorliegenden Erfindung in einem Schaltnetzteil gemäß einer möglichen Ausführungsform;
- **Figur 2**: einen Auszug der internen Schaltung der Regelschaltung gemäß einer ersten Ausführungsform;
- **Figur 3**: einen Auszug der internen Schaltung der Regelschaltung gemäß einer zweiten Ausführungsform;
- **Figur 4**: ein Beispiel für eine messspannungsabhängige Referenzspannung für das Einschalten des Schalttransistors;
- **Figur 5**: ein Blockschaltbild einer bekannten Regelschaltung in ihrer Applikationsumgebung.

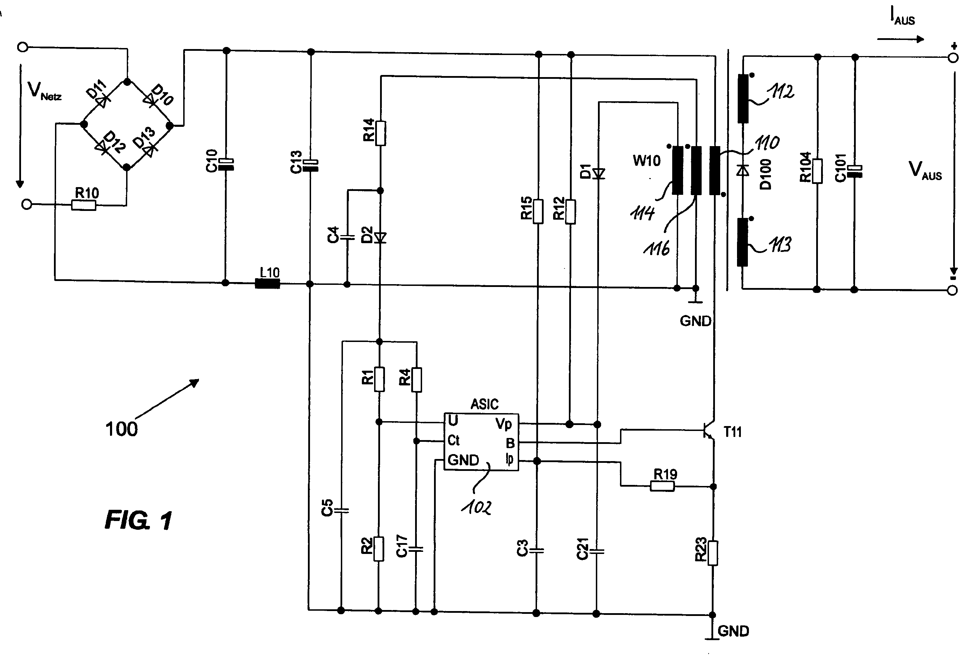

Figur 1 zeigt einen Schaltplan eines primär gesteuerten Schaltnetzteils mit einer Regelschaltung gemäß der vorliegenden Erfindung. Grundsätzlich sind in dieser Anordnung die Prinzipien gemäß der deutschen Patentanmeldung DE 10 2004 016927.6 verwirklicht.

Insbesondere können die Ausgangsspannung V_{AUS} und der Ausgangsstrom I_{AUS} so geregelt werden, dass sie einen Verlauf gemäß einer vorbestimmten Ausgangskennlinie aufweisen. Gemäß der vorliegenden Ausführungsform ist dies eine lineare Abhängigkeit.

Das Schaltnetzteil wird an seinem Eingang mit der Wechselspannung V_{NETZ} beaufschlagt. In Europa variiert die Netzspannung zwischen 180 V und 263 V Wechselspannung, in Amerika zwischen 90 V und 130 V Wechselspannung. Mit Hilfe des Brückengleichrichters D10 bis D13 sowie der Kondensatoren C10 und C13 zusammen mit der Induktivität L10 wird die Eingangsspannung V_{NETZ} gleichgerichtet und stabilisiert und es wird sichergestellt, dass Störsignale, die im Schaltnetzteil erzeugt werden, nicht ins Wechselspannungsnetz gelangen.

Die primärseitige Wicklung 110 des Transformators W10 und der primärseitige Schalter T11, der hier ein Leistungstransistor ist, bilden einen Serienkreis, der mit der gleichgerichteten Eingangsspannung verbunden ist. Der primärseitige Schalter T11 unterbricht den Strom, der durch die primärseitige Wicklung 110 fließt, entsprechend dem Steuersignal B der Regelschaltung 102.

Die Abschaltdauer des primärseitigen Schalters T11 wird so eingestellt, dass die in dem Transformator W10 eingespeiste Energie abhängig ist von der Ausgangsspannung V_{AUS.} Es wird also die übertragene Leistung so eingestellt, dass sich ein gewünschter Wert für die Ausgangsspannung V_{AUS} ergibt. Dabei wird der Wert für die Spannung U_{AUS} so angepasst, dass sich ein konstanter und vorbestimmter Wert für den Ausgangstrom I_{AUS} ergibt. Im Unterschied zu der in der DE 10 2004 016927.6 vorgeschlagenen Lösung weist die Regelschaltung, die hier als anwenderspezifische integrierte Schaltung (ASIC) ausgeführt ist, zwei separate Eingänge U und V_{P} für die Messspannung und die Versorgungsspannung auf.

Der Messspannungsanschluss U wird mit einer Messspannung V(U) beaufschlagt, die in einer ersten Hilfswicklung 116 erzeugt wird. Der Versorgungsspannungsanschluss V_{P} wird davon getrennt mit einer Versorgungsspannung V(V_{P}) beaufschlagt, die mit Hilfe einer zweiten Hilfswicklung 114 gewonnen wird. Die Auftrennung der beiden Eingänge U und V_{P} könnte auch auf der Basis einer einzigen Hilfswicklung durchgeführt werden. Die hier gezeigte Ausführungsform bietet aber den Vorteil einer vollständigen Unabhängigkeit der beiden Zweige voneinander. Insbesondere können die Windungszahlen der beiden Hilfswicklungen 114, 116 entsprechend den jeweiligen Erfordernissen gewählt werden.

Damit der Spannungspegel am Messspannungsanschluss U (und damit letztendlich die Ausgangsspannung V_{AUS}) trimmbar ist, ist ein Spannungsteiler R1, R2 vorgesehen.

Der Kondensator C17 ist mit dem Anschluss Cₜ des ASIC 102 so verbunden, dass die an ihm abfallende Spannung die Zeit bis zum Einschalten des primärseitigen Schalters T11 bestimmt. Die Betriebsspannung (oder auch Versorgungsspannung) V(V_{P}) des ASIC 102 wird am Anschluss V_{P} zugeführt.

Der Eingang IP des erfindungsgemäßen ASIC 102 dient der Messung des Stroms, der durch die primärseitige Wicklung 110 des Transformators W10 fließt, wenn der primärseitige Schalter T11 geschlossen ist. Dies kann in an sich bekannter Weise ähnlich der in der DE 10 2004 016927.6 vorgeschlagenen Lösung erfolgen. Der sechste Anschluss des erfindungsgemäßen ASIC ist ein Masseanschluss GND und ist mit Masse verbunden.

Erfindungsgemäß wird die Ladedauer des zeitbestimmenden Kondensators C17 in der Spannungsregelung durch einen Kurzschluss verlängert.

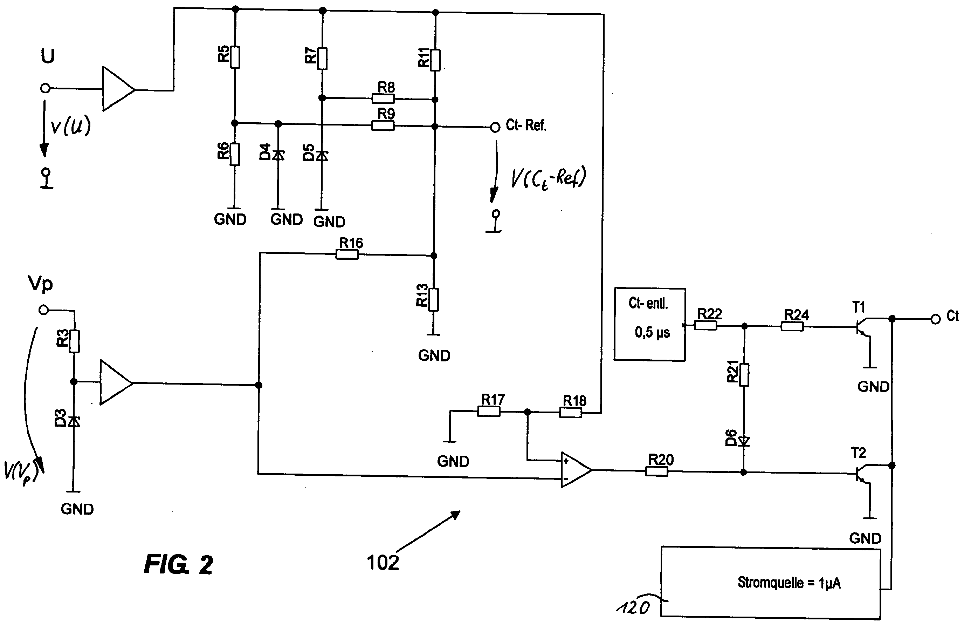

Mit Bezug auf Figur 2 soll nunmehr der Aufbau und die Funktionsweise der erfindungsgemäßen Regelschaltung 102 näher betrachtet werden. Dabei zeigt Figur 2 lediglich einen Ausschnitt aus dieser Regelschaltung gemäß einer ersten vorteilhaften Ausführungsform. Es sind nur die äußeren Anschlüsse U, V_{P} und Cₜ dargestellt; die übrigen Teile der Regelschaltung sind nicht unbedingt erfindungsrelevant und können daher in bekannter Weise realisiert sein.

An dem Anschluss U wird die Messspannung V(U) zugeführt. An dem Anschluss C_{T} ist, wie in der Figur 1 gezeigt, der Ladekondensator C17 angeschlossen. Gemäß der vorliegenden Erfindung fließt der Ladestrom in den Ladekondensator C17 kontinuierlich und der Ladekondensator C17 wird über den Anschluss C_{T} kurzgeschlossen, um die Ladedauer des zeitbestimmenden Kondensators zu verlängern.

In der vorliegenden Ausführungsform ist die Entladezeit des zeitbestimmenden Kondensators auf 0,5 µs festgelegt. An dem Anschluss Ct-Ref kann intern eine Referenzspannung V(Ct-Ref) zugeführt werden, um aus einem Vergleich mit der an dem Anschluss U anliegenden Messspannung V(U) den Kondensator C17 aufzuladen oder kurzzuschließen.

Gemäß einer vorteilhaften Weiterbildung der vorliegenden Erfindung ist V(Ct-Ref) kein fester Wert, sondern selbst wiederum abhängig von der Messspannung V(U). Grundsätzlich müsste idealerweise die Schaltfrequenz in der Stromregelung direkt proportional zu der Ausgangsspannung V_{AUS} und dem Spannungsabfall an der Sekundärdiode D100 aus Figur 1 sein. Wenn jedoch, wie dies erfindungsgemäß der Fall ist, die Ausgangspannung V_{AUS} über die Hilfswicklung 116 des Transformators W10 erfasst werden soll, führt die Gleichrichterdiode D100 zu einer Abweichung von dem Idealwert, da sie einen Offset von der Messspannung abzieht. Darüber hinaus ist, wie bereits erwähnt, der Ladestrom des zeitbestimmenden Kondensators C17 nicht proportional zur Messspannung V(U), da die Spannung an dem Kondensator C17 in Reihe zu dem Ladewiderstand R4 liegt. Diese Abweichung könnte reduziert werden, wenn die Schwellenspannung V(Ct-Ref) zum Einschalten des Schalttransistors T11 verringert würde. Das hat aber den Nachteil, dass die Erkennung weniger genau wird, denn der Offset des Eingangskomparators wirkt stärker. Darüber hinaus wird für die gleiche Zeitdauer ein größerer Kondensator C17 benötigt und es entsteht eine Abweichung durch die Entladedauer des zeitbestimmenden Kondensators C17.

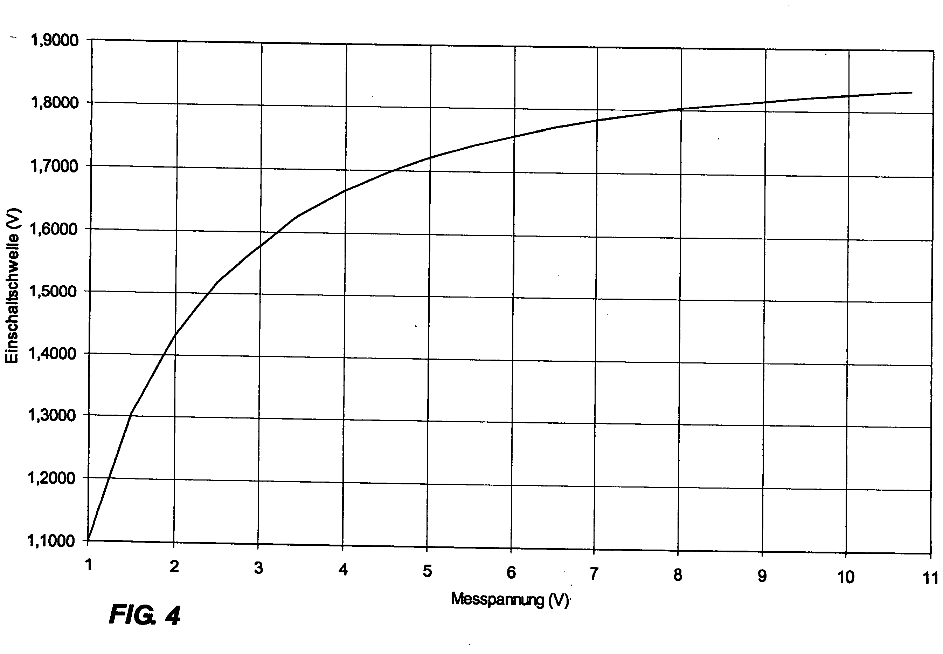

Deshalb kann der Schwellenspannung zum Einschalten des Schalttransistors eine Spannung überlagert werden, die wiederum von der Messspannung V(U) abhängig ist. Die Figur 4 zeigt einen möglichen Kurvenverlauf der Spannung V(Ct-Ref) in Abhängigkeit von der Messspannung V(U), jeweils in Volt. Der hier gezeigte Verlauf gilt für einen Spannungsfall an der Diode D2 im Messkreis von 0,5 V, eine maximale Schaltfrequenz von ca. 40kHz und eine Entladedauer des Kondensators C17 von 0,5 µs. Näherungsweise kann der in Figur 4 dargestellte Spannungsverlauf mit Hilfe einiger Zehnerdioden und Widerstände erzeugt werden und ist daher vollständig im ASIC integrierbar. Durch eine solche Referenzspannung V(Ct-Ref) werden die oben beschriebenen Abweichungen kompensiert, sodass sich mit dem erfindungsgemäßen Schaltnetzteil ein nahezu von der Ausgangspannung unabhängiger Ausgangstrom I_{AUS} ergibt.

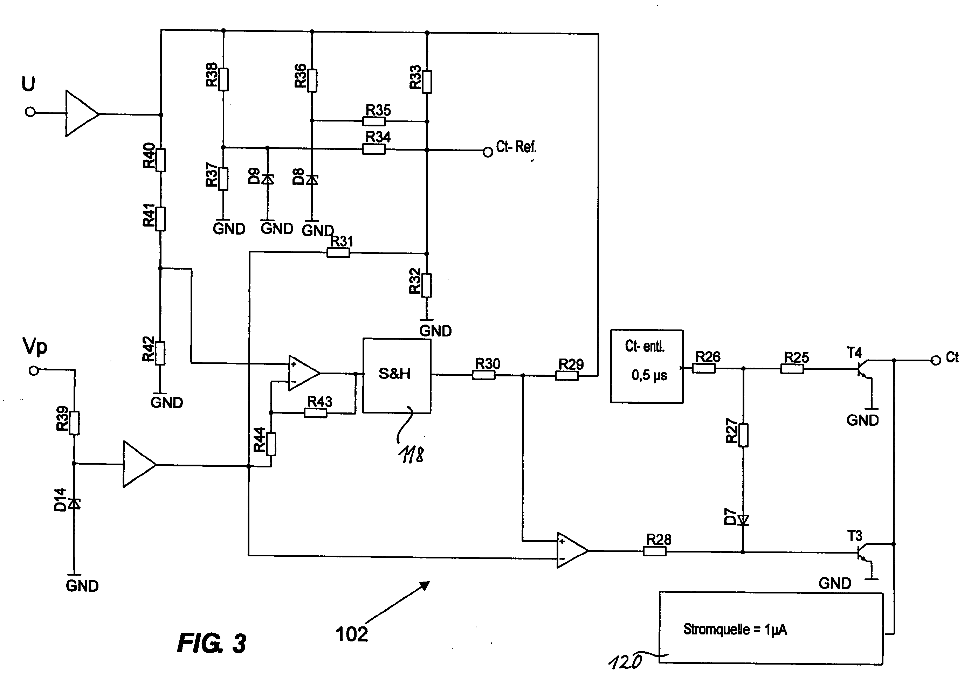

Eine weitere Ausführungsform der erfindungsgemäßen Regelschaltung ist in der Figur 3 gezeigt. Auch hier sind nur Auszüge der gesamten Regelschaltung gezeigt, um die Übersichtlichkeit zu wahren. Ein wesentlicher Unterschied dieser Schaltung von der in Figur 2 gezeigten Ausführungsform besteht darin, dass ein Abtasthalteglied 118 (sample and hold, S&H) vorgesehen ist, um eine Abweichung der Messspannung V(U) von dem Referenzwert kurz nach dem Abschalten des Schalttransistors T11 zu erfassen und zu speichern. In der gezeigten Schaltung wird der gespeicherte Wert zu der Messspannung V(U) addiert und erst, wenn die Summe aus dem gespeicherten Wert und der Messspannung V(U) die Referenzspannung V(Ct-Ref) unterschreitet, wird der Schalttransistor T11 wieder eingeschaltet. Alternativ könnte der in dem Abtasthalteglied 118 gespeicherte Wert selbstverständlich auch von der Referenzspannung V(Ct-Ref) abgezogen werden. Auf diese Weise kann wie bei der Lösung aus der DE 10 2004 016927.6 auftretende Effekt, dass die Referenzspannung überschritten wird, ausgeglichen werden und somit wird die Ausgangspannung V_{AUS} lastunabhängig.

Sowohl im Ausführungsbeispiel der Figur 2 wie auch im Ausführungsbeispiel der Figur 3 ist eine Stromquelle 120 vorgesehen, die einen Strom in Höhe von beispielsweise 1µA liefert, und abgeschaltet wird, wenn die Messspannung V(U) einen bestimmten Wert überschreitet (beispielsweise 1,5V), um stabile Anfangsbedingungen herzustellen.

Da die Spannungserfassung bei der erfindungsgemäßen Regelschaltung unabhängig von der Betriebsspannung der Schaltung erfolgt, kann die Betriebsspannung auch so ausgelegt werden, dass selbst im Kurzschlussfall noch der eingestellte Ausgangsstrom I_{AUS} fließt. Daher können mit der erfindungsgemäßen Regelschaltung viele Probleme bei bekannten Lösungen überkommen werden und dennoch eine kostengünstige und stark miniaturisierte Anordnung erreicht werden. Insbesondere ist eine Realisierung als ASIC in einem preisgünstigen 6-Pin-Gehäuse (z. B. SOT23-6) möglich.

## Patentansprüche

1. Primärgesteuertes Schaltnetzteil, das aufweist:
eine Regelschaltung (102) zum Regeln der Ausgangsspannung des primärgesteuerten Schaltnetzteils,
einen primärseitigen Schalter (T11) und einen Transformator (W10) mit mindestens einer Hilfswicklung (114, 116), in der nach dem Öffnen des primärseitigen Schalters (T11) eine Hilfsspannung induziert wird, und
einen Ladekondensator (C17), der mit einem Eingangsanschluss (Ct) der Regelschaltung (102) verbunden ist,
wobei der Ladekondensator (C17) in Abhängigkeit von einer aus der Hilfsspannung erzeugten Messspannung (V(U)) aufladbar ist,
die Regelschaltung (102) so ausgeführt ist, dass sie die Schaltfrequenz des primärseitigen Schalters (T11) in linearer Abhängigkeit von der Messspannung (V(U)) einstellt, indem die an dem Ladekondensator (C17) abfallende Spannung die Schaltfrequenz des primärseitigen Schalters (T11) steuert, und ein konstanter Faktor dieser linearen Abhängigkeit so gewählt ist, dass der Ausgangsstrom (I_{AUS}) des Schaltnetzteils einen vorbestimmten Stromwert annimmt, und
die Regelschaltung (102) so ausgebildet ist, dass sie die an dem Ladekondensator (C17) abfallende Spannung mit einem Referenzwert (V(Ct-Ref)) vergleicht und ein Einschaltsignal zum Einschalten des primärseitigen Schalters (T11) erzeugt, wenn die an dem Ladekondensator abfallende Spannung den Referenzwert erreicht,
wobei die Regelschaltung (102) einen Messspannungsanschluss (U) zum Verbinden mit der Messspannung (V(U)) und einen davon getrennten Versorgungsspannungsanschluss (V_{P}) zum Verbinden mit einer Versorgungsspannung (V(VP)), die aus der Hilfsspannung erzeugt ist, aufweist,
die Regelschaltung (102) so ausgebildet ist, dass sie den Ladekondensator (C17) kurzschließt, wenn die Messspannung (V(U)) einen vorbestimmten Spannungswert erreicht, und
der Referenzwert (V(Ct-Ref)) in Abhängigkeit von der Messspannung (V(U)) einstellbar ist.

2. Schaltnetzteil nach Anspruch 1, wobei die Abhängigkeit des Referenzwerts (V(Ct-Ref)) von der Messspannung (V(U)) so gewählt ist, dass sie den Einfluss einer sekundärseitigen Gleichrichterdiode (D100) auf die Messspannung kompensiert.

3. Schaltnetzteil nach einem der vorangegangenen Ansprüche, die ein Abtasthalteglied (118) zum Erfassen einer Abweichung der Messspannung (V(U)) von dem Referenzwert (V(Ct-Ref)) unmittelbar nach dem Abschalten des primärseitigen Schalters (T11) aufweist.

4. Schaltnetzteil nach einem der vorangegangenen Ansprüche, wobei der Transformator (W10) eine erste Hilfswicklung zum Erzeugen der Messspannung und eine zweite Hilfswicklung zum Erzeugen der Versorgungsspannung aufweist.

5. Schaltnetzteil nach einem der vorangegangenen Ansprüche, wobei mit dem Messspannungsanschluss (U) weiterhin ein Spannungsteiler (R1, R2) zum Trimmen des Spannungspegels der Ausgangsspannung des Schaltnetzteils verbunden ist.

6. Verfahren zum Regeln der Ausgangsspannung eines primärgesteuerten Schaltnetzteils mittels einer Regelschaltung (102), wobei das Schaltnetzteil einen Ladekondensator (C17), der mit einem Eingangsanschluss (Ct) der Regelschaltung verbundenen ist, einen primärseitigen Schalter (T11) und einen Transformator (W10) mit mindestens einer Hilfswicklung (116), in der nach dem Öffnen des primärseitigen Schalters eine Hilfsspannung zum Erzeugen einer Messspannung (V(U)), welche die Ausgangsspannung abbildet, und zum Erzeugen einer Versorgungsspannung (V(VP)) für die Regelschaltung induziert wird, aufweist, das Verfahren umfasst:
Aufladen des Ladekondensators (C17) in Abhängigkeit von der Messspannung (V(U)),
Einstellen der Schaltfrequenz des primärseitigen Schalters (T11) in linearer Abhängigkeit von der Messspannung (V(U)), indem die an dem Ladekondensator (C17) abfallende Spannung die Schaltfrequenz des primärseitigen Schalters (T11) steuert, wobei ein konstanter Faktor dieser linearen Abhängigkeit so gewählt ist, dass der Ausgangsstrom des Schaltnetzteils einen vorbestimmten Stromwert annimmt,
Vergleichen der an dem Ladekondensator (C17) abfallenden Spannung mit einem Referenzwert (V(Ct-Ref)), und
Erzeugen eines Einschaltsignals zum Einschalten des primärseitigen Schalters (T11), wenn die an dem Ladekondensator abfallende Spannung den Referenzwert (V(Ct-Ref)) erreicht,
Zuführen der Messspannung (V(U)) und der Versorgungsspannung (V(Vp)) über voneinander getrennte Anschlüsse der Regelschaltung,
Kurzschließen des Ladekondensators (C17), wenn die Messspannung (V(U)) einen vorbestimmten Spannungswert (V(Ct-Ref)) erreicht, und
Einstellen des Referenzwertes (V(Ct-Ref)) in Abhängigkeit von der Messspannung (V(U)).

7. Verfahren nach Anspruch 6, wobei die Abhängigkeit des Referenzwerts (V(Ct-Ref)) von der Messspannung (V(U)) so gewählt ist, dass sie den Einfluss einer sekundärseitigen Gleichrichterdiode (D100) auf die Messspannung kompensiert.

8. Verfahren nach Anspruch 6 oder 7, wobei nach dem Abschalten des primärseitigen Schalters eine Abweichung der Messspannung von dem Referenzwert gespeichert wird und der gespeicherte Wert zum Erzeugen eines neuen Referenzwerts verwendet wird.

9. Verfahren nach Anspruch 8, wobei der gespeicherte Wert zur Messspannung addiert wird und der primäre Schalter eingeschaltet wird, wenn die Summe aus der Messspannung und dem gespeicherten Wert den Referenzwert unterschreitet.

10. Verfahren nach einem der Ansprüche 6 bis 9, wobei die Messspannung und die Versorgungsspannung auf der Basis von einer ersten und einer zweiten Hilfsspannung, die jeweils in separaten primärseitigen Hilfswicklungen erzeugt werden, gebildet werden.

## Claims

1. Primary controlled switched-mode power supply comprising:
a control circuit (102) for controlling the output voltage of the primary-controlled switched-mode power supply,
a primary-side switch (T11) and a transformer (W10) with at least one auxiliary winding (114, 116), in which an auxiliary voltage is induced after opening the primary-side switch (T11), and
a charging capacitor (C17) which is connected with an input terminal (Ct) of the control circuit (102),
wherein the charging capacitor (C17) can be charged in relationship to a measurement voltage (V(U)) generated from said auxiliary voltage,
wherein the control circuit (102) is adapted to set the switching frequency of the primary-side switch (T11) in a linear relationship to the measurement voltage, by the voltage dropped across the charging capacitor (C17) controlling the switching frequency of the primary-side switch, and wherein a constant factor of this linear relationship is selected such that the output current (I_{AUS}) of the switched-mode power supply assumes a predetermined current value, and
wherein the control circuit (102) is adapted to compare the voltage dropped across the charging capacitor (C17) with a reference value (V(Ct-Ref)) and produces a turn-on signal for switching on the primary-side switch (T11) when the voltage dropped across the charging capacitor reaches the reference value,
wherein the control circuit (102) comprises a measurement voltage terminal (U) for connection to the measurement voltage (V(U)) and a supply voltage terminal (V_{P}), separate from same, for connecting to a supply voltage (V(VP)) which is produced from the auxiliary voltage, and wherein the control circuit (102) is formed such that it short-circuits the charging capacitor (C17) when the measurement voltage (V(U)) reaches a predetermined voltage value, and
wherein the reference value (V(Ct-Ref)) can be adjusted depending on the measurement voltage (V(U)).

2. Switched-mode power supply according to claim 1, wherein the relationship of the reference value (V(Ct-Ref)) to the measurement voltage is selected such that the influence of a secondary-side rectifier diode (D100) on the measurement voltage is compensated.

3. Switched-mode power supply according to one of the preceding claims, which comprises a sample-and-hold (118) for the acquisition of a deviation of the measurement voltage (V(U)) from the reference value (V(Ct-Ref)) directly after the primary-side (T11) switch turns off.

4. Switched-mode power supply according to one of the preceding claims, wherein the transformer (W10) comprises a first auxiliary winding for generating the measurement voltage, and a second auxiliary winding for producing the supply voltage.

5. Switched-mode power supply according to one of the preceding claims, wherein furthermore a voltage divider (R1, R2) is connected to the measurement voltage terminal (U) for trimming the voltage level on the output voltage of the switched-mode power supply.

6. Method of controlling the output voltage of a primary-controlled switched-mode power supply using a control circuit (102), wherein the switched-mode power supply comprises a charging capacitor (C17), which is connected to an input terminal (Ct) of the control circuit (102), a primary-side switch (T11) and a transformer (W10) with at least one auxiliary winding (116) in which, after opening the primary-side switch, an auxiliary voltage is induced for producing a measurement voltage (V(U)) which mirrors the output voltage, and for producing a supply voltage (V(VP)) for the control circuit, the method comprising:
charging the charging capacitor (C17) in relationship to the measurement voltage (V(U)),
adjusting the switching frequency of the primary-side switch (T11) in linear relationship to the measurement voltage (V(U)), by the voltage dropped across the charging capacitor (C17) controlling the switching frequency of the primary-side switch, wherein a constant factor of this linear relationship is selected such that the output current of the switched-mode power supply assumes a predetermined current value,
comparing the voltage dropped across the charging capacitor (C17) with a reference value (V(Ct-Ref)), and
generating a turn-on signal for switching on the primary-side switch (T11) when the voltage dropped across the charging capacitor reaches the reference value (V(Ct-Ref)),
applying the measurement voltage (V(U)) and the supply voltage (V(VP)) via separate terminals of the control circuit,
short-circuiting the charging capacitor (C17) when the measurement voltage (V(U)) reaches a predetermined voltage value (V(Ct-Ref)), and
adjusting the reference value (V(Ct-Ref)) depending from the measurement voltage (V(U)).

7. Method according to claim 6, wherein the relationship of the reference value (V(Ct-Ref)) to the measurement voltage is selected such that the influence of a secondary-side rectifier diode (D100) on the measurement voltage is compensated.

8. Method according to claim 6 or 7, wherein after switching off the primary-side switch a deviation of the measurement voltage from the reference value is stored and wherein the stored value is used for generating a new reference value.

9. Method according to claim 8, wherein the stored value is added to the measurement voltage and the primary switch is turned on when the sum of the measurement voltage and the stored value is below the reference value.

10. Method according to one of the claims 6 to 9, wherein the measurement voltage and the supply voltage are formed based on a first and a second auxiliary voltage, which are each produced in separate primary-side auxiliary windings.

## Revendications

1. Alimentation à découpage à commande primaire, qui comprend :
un circuit de régulation (102) pour réguler la tension de sortie de l'alimentation à découpage à commande primaire,
un commutateur (T11) côté primaire et un transformateur (W10) avec au moins un enroulement auxiliaire (114, 116), dans lequel est induite une tension auxiliaire après l'ouverture du commutateur (T11) côté primaire,
et un condensateur de charge (C17) qui est relié à une borne d'entrée (Ct) du circuit de régulation (102),
alimentation à découpage dans laquelle
le condensateur de charge (C17) peut être chargé en fonction d'une tension de mesure (V(U)) engendrée à partir de la tension auxiliaire,
le circuit de régulation (102) est réalisé de manière à régler la fréquence de commutation du commutateur (T11) côté primaire en fonction de la tension de mesure (V(U)) selon une relation de dépendance linéaire, par le fait que la tension chutant au niveau du condensateur de charge (C17) commande la fréquence de commutation du commutateur (T11) côté primaire, et un facteur constant de cette relation de dépendance linéaire est choisi de façon à ce que le courant de sortie (I_{AUS}) de l'alimentation à découpage prenne une valeur de courant prédéterminée, et
le circuit de régulation (102) est configuré de manière à comparer la tension chutant au niveau du condensateur de charge (C17) à une valeur de référence (V(Ct-Ref)), et à engendrer un signal de mise en marche pour mettre en marche le commutateur (T11) côté primaire, lorsque la tension chutant au niveau du condensateur de charge atteint la valeur de référence,
et dans laquelle
le circuit de régulation (102) comporte une borne de raccordement de tension de mesure (U) pour la liaison avec la tension de mesure (V(U)), et, séparée de celle-ci, une borne de raccordement de tension d'alimentation (V_{P}) pour la liaison avec une tension d'alimentation (V(VP)), qui est produite à partir de la tension auxiliaire,
le circuit de régulation (102) est configuré de manière à mettre le condensateur de charge (C17) en court-circuit lorsque la tension de mesure (V(U)) atteint une valeur de tension prédéterminée, et
la valeur de référence (V(Ct-Ref)) est réglable en fonction de la tension de mesure (V(U)).

2. Alimentation à découpage selon la revendication 1, dans laquelle la relation de dépendance de la valeur de référence (V(Ct-Ref)) à la tension de mesure (V(U)) est choisie de manière à ce qu'elle compense l'influence d'une diode de redressement (D100) côté secondaire sur la tension de mesure.

3. Alimentation à découpage selon l'une des revendications précédentes, qui comporte un organe échantillonneur-bloqueur (118) pour relever un écart de la tension de mesure (V(U)) par rapport à la valeur de référence (V(Ct-Ref)) directement après l'arrêt du commutateur (T11) côté primaire.

4. Alimentation à découpage selon l'une des revendications précédentes, dans laquelle le transformateur (W10) comporte un premier enroulement auxiliaire pour produire la tension de mesure et un deuxième enroulement auxiliaire pour produire la tension d'alimentation.

5. Alimentation à découpage selon l'une des revendications précédentes, dans laquelle à la borne de raccordement de tension de mesure (U) est relié, par ailleurs, un diviseur de tension (R1, R2) pour ajuster le niveau de tension de la tension de sortie de l'alimentation à découpage.

6. Procédé de régulation de la tension de sortie d'une alimentation à découpage à commande primaire au moyen d'un circuit de régulation (102), l'alimentation à découpage comportant un condensateur de charge (C17), qui est relié à une borne de raccordement d'entrée (Ct) du circuit de régulation, un commutateur (T11) côté primaire et un transformateur (W10) avec au moins un enroulement auxiliaire (116) dans lequel est induit, après l'ouverture du commutateur côté primaire, une tension auxiliaire pour produire une tension de mesure (V(U)), qui reproduit la tension de sortie, et pour produire une tension d'alimentation (V(VP)) pour le circuit de régulation, le procédé comprenant :
la charge du condensateur de charge (C17) en fonction de la tension de mesure (V(U)),
le réglage de la fréquence de commutation du commutateur (T11) côté primaire en fonction de la tension de mesure (V(U)) selon une relation de dépendance linéaire, par le fait que la tension chutant au niveau du condensateur de charge (C17) commande la fréquence de commutation du commutateur (T11) côté primaire, et un facteur constant de cette relation de dépendance linéaire est choisi de façon à ce que le courant de sortie de l'alimentation à découpage prenne une valeur de courant prédéterminée,
la comparaison de la tension chutant au niveau du condensateur de charge (C17) à une valeur de référence (V(Ct-Ref)), et
la production d'un signal de mise en marche pour mettre en marche le commutateur (T11) côté primaire, lorsque la tension chutant au niveau du condensateur de charge atteint la valeur de référence (V(Ct-Ref)),
l'amenée de la tension de mesure (V(U)) et de la tension d'alimentation (V(VP)) par l'intermédiaire de bornes de raccordement séparées du circuit de régulation,
la mise en court-circuit du condensateur de charge (C17) lorsque la tension de mesure (V(U)) atteint une valeur de tension (V(Ct-Ref)) prédéterminée, et
le réglage de la valeur de référence (V(Ct-Ref)) en fonction de la tension de mesure (V(U)).

7. Procédé selon la revendication 6, d'après lequel la relation de dépendance de la valeur de référence (V(Ct-Ref)) à la tension de mesure (V(U)) est choisie de manière à ce qu'elle compense l'influence d'une diode de redressement (D100) côté secondaire sur la tension de mesure.

8. Procédé selon la revendication 6 ou la revendication 7, d'après lequel après l'arrêt du commutateur côté primaire, on mémorise un écart de la tension de mesure par rapport à la valeur de référence, et la valeur mémorisée est utilisée pour produire une nouvelle valeur de référence.

9. Procédé selon la revendication 8, d'après lequel la valeur mémorisée est additionnée à la tension de mesure, et le commutateur côté primaire est mis en marche lorsque la somme de la tension de mesure et de la valeur mémorisée est inférieure à la valeur de référence.

10. Procédé selon l'une des revendications 6 à 9, d'après lequel la tension de mesure et la tension d'alimentation sont formées sur la base d'une première et d'une deuxième tension auxiliaire, qui sont respectivement produites dans des enroulements auxiliaires, séparés, côté primaire.
